# EUROPÄISCHE PATENTSCHRIFT

(11) **EP 2 887 359 B1**
(45) Veröffentlichungstag und Bekanntmachung des Hinweises auf die Patenterteilung: **31.01.2018**
(21) Anmeldenummer: 13198999.8
(22) Anmeldetag: 20.12.2013
(51) Int. Cl.: G21F 9/08, G21F 5/06, G21F 9/34, F26B 5/04, G21C 19/40, G21F 5/008, G21F 9/30

(54) **Verfahren zur Trocknung von Transport- und/oder Lagerbehältern für radioaktive Abfälle**
Method for drying transport and/or storage containers for radioactive wastes
Procédé de séchage de récipients de transport et/ou de stockage pour déchets radioactifs

(43) Veröffentlichungstag der Anmeldung: 24.06.2015
(73) Patentinhaber: GNS Gesellschaft für Nuklear-Service mbH, 45127 Essen (DE)
(72) Erfinder: Jussofie, Dr. Astrid, 45239 Essen (DE); Rirschl, Christoph, 44653 Herne (DE); Ender, Prof. Volker, 02763 Bertsdorf-Hörnitz (DE)
(74) Vertreter: Rohmann, Michael

(56) Entgegenhaltungen:
- EP-A1- 0 175 140
- EP-A2- 0 028 726
- DE-C1- 19 814 791

## Beschreibung

Die Erfindung betrifft ein Verfahren zur Trocknung von Transport- und/oder Lagerbehältern für radioaktive Abfälle, insbesondere für abgebrannte Brennelemente, wobei der Wasser enthaltende Behälterinnenraum des Behälters einer Trocknung, insbesondere einer Vakuumtrocknung unterzogen wird. - Statt des Begriffes Transport- und/oder Lagerbehälter wird nachfolgend auch kurz der Begriff Behälter verwendet.

Verfahren der vorstehend genannten Art sind aus der Praxis grundsätzlich bekannt. Die Behälter werden in der Regel unter Wasser mit abgebrannten Brennelementen beladen, weil Wasser ein effektives Abschirmungsmedium für entstehende Neutronen darstellt. Das in diesem Zusammenhang eingesetzte Wasser wird als Beckenwasser bezeichnet. Insbesondere in Druckwasserreaktoren (DWR) wird dem Wasser bzw. Beckenwasser normalerweise eine Borverbindung, in der Regel in Form von Borsäure zugesetzt. Natürliches Bor besteht zu etwa 20% aus dem Isotop B-10, das einen hohen Absorptionskoeffizienten für thermische Neutronen hat. - Es ist weiterhin üblich den Behälter zur weiteren Handhabung zunächst zu entwässern und anschließend das noch verbliebene Wasser bzw. Beckenwasser durch Trocknung, insbesondere durch Vakuumtrocknung aus dem Behälter zu entfernen. Dazu wird zweckmäßigerweise ein Unterdruck an dem Behälter angelegt. Nichtsdestoweniger bleibt nach der Trocknung in der Regel Wasser im Behälterinnenraum des Behälters zurück und zwar insbesondere in Form von an die Borverbindung bzw. an die Borsäure chemisch gebundenem Wasser. Diese gebundene Wassermenge erschwert den Nachweis der Restfeuchte im Behälter, der im Hinblick auf den korrosiven Einfluss der Restfeuchte zu führen ist.

In DE 198 14 791 C1 wird ein Verfahren zur Trocknung von Transport- und/oder Lagerbehältern mit radioaktiven Abfallstoffen beschrieben. Weiterhin wird eine Vorrichtung zur Durchführung dieses Verfahrens offenbart. Der Behälterinnenraum wird durch Erzeugung eines Unterdruckes im Behälterinnenraum getrocknet und insoweit das Wasser aus dem Behälterinnenraum entfernt. Die Verdampfungsrate während dieser Trocknung wird ermittelt und nach einer Trocknungszeitspanne wird die im Behälterinnenraum verbliebene Restfeuchte bestimmt. Dazu wird die Unterdrucktrocknung bzw. Vakuumtrocknung bis zum Gefrieren von Restfeuchtigkeit im Behälterinnenraum durchgeführt. Aus der Abweichung der Verdampfungsrate während des Gefriervorgangs wird die im Behälterinnenraum noch verbliebene Restfeuchtigkeit ermittelt. Auch bei diesem Verfahren stellt sich aber das oben bereits geschilderte Problem ein. Das an Borverbindungen gebundene Wasser erschwert auch hier den Nachweis der Restfeuchte im Behälter.

Aus EP 0 028 726 A1 ist ein Verfahren zum Trocknen von radioaktiven Abwasserkonzentraten aus Verdampferanlagen mit einem Zwei-Walzen-Trockner bekannt. Das Konzentrat wird vorgewärmt und bei Walzentemperaturen zwischen 160 und 210° C getrocknet. Die Konzentrate können Borsalze enthalten und bei bestimmten Trocknungsbedingungen können Borsalze mit geringem Kristallwassergehalt resultieren.

Das Dokument EP 0 175 140 A1 betrifft einen mechanisch widerstandsfähigen Lagerbehälter für die langfristige Lagerung von abgebrannten Brennstäben. Dieser Lagerbehälter kann boriertes Wasser enthalten. Es wird auch eine Trocknung des Behälterinnenraums beschrieben.

Der Erfindung liegt das technische Problem zugrunde, ein Verfahren der eingangs genannten Art anzugeben, mit dem das oben erläuterte Problem vermieden werden kann und mit dem Restwasser effektiv aus dem Behälterinnenraum entfernt werden kann.

Zur Lösung dieses technischen Problems lehrt die Erfindung ein Verfahren zur Trocknung von Transport- und/oder Lagerbehältern für radioaktive Abfälle, insbesondere für abgebrannte Brennelemente, wobei der Wasser bzw. Restwasser enthaltende Behälterinnenraum des Behälters einer Trocknung, insbesondere einer Vakuumtrocknung unterzogen wird, wobei zumindest eine im Behälterinnenraum vorhandene Borverbindung mit chemisch gebundenem Wasser mit zumindest einer Reaktionssubstanz versetzt wird, so dass das chemisch gebundene Wasser der Borverbindung freigesetzt wird, wobei aus der chemisch gebundenes Wasser aufweisenden Borverbindung und der Reaktionssubstanz ein verdampfbares Borprodukt als Reaktionsprodukt entsteht und wobei das freigesetzte Wasser sowie das verdampfbare Borprodukt bzw. Reaktionsprodukt bei der Trocknung, insbesondere bei der Vakuumtrocknung des Behälters aus dem Behälterinnenraum abgezogen bzw. entfernt wird.

Es liegt im Rahmen der Erfindung, dass - wie oben bereits erläutert - der Behälter unter Wasser mit abgebrannten Brennelementen beladen wird. Im Anschluss daran erfolgt zweckmäßigerweise für die weitere Handhabung des Behälters zunächst eine Entwässerung des Behälterinnenraumes. Dazu wird im Behälterinnenraum vorhandenes Wasser bzw. Beckenwasser empfohlenermaßen abgepumpt. Im Anschluss daran wird der Behälterinnenraum bevorzugt einer Trocknung bzw. Vakuumtrocknung unterzogen. Zweckmäßigerweise erfolgt die Trocknung/Vakuumtrocknung bei einem Unterdruck und zwar vorzugsweise bei einem Unterdruck von bis zu 12 mbar, bevorzugt bis zu 10 mbar. Dieser Unterdruck wird an den Behälterinnenraum angelegt. Es liegt im Rahmen der Erfindung, dass der Unterdruck zweckmäßigerweise auf 10 mbar begrenzt ist, um insbesondere ein Gefrieren der Restfeuchte bei 6 mbar zu verhindern.

Der Erfindung liegt die Erkenntnis zugrunde, dass mit dem erfindungsgemäßen Verfahren bei der Durchführung der Trocknung des Behälterinnenraums nicht nur das ungebundene Wasser bzw. Beckenwasser entfernt wird, sondern auch das gebundene Wasser freigesetzt wird und abgezogen bzw. entfernt werden kann. Dazu wird die zumindest eine Reaktionssubstanz in den Behälterinnenraum gegeben. Es liegt im Rahmen der Erfindung, dass die Reaktionssubstanz mit der Borverbindung im Behälterinnenraum reagiert und dass dadurch das an die Borverbindung gebundene Wasser freigesetzt wird. Dieses freigesetzte Wasser kann bei der Trocknung bzw. Vakuumtrocknung abgezogen werden.

Zweckmäßigerweise handelt es sich bei der chemisch gebundenes Wasser aufweisenden Borverbindung um Borsäure bzw. Orthoborsäure (H₃BO₃). Die Borverbindung bzw. die Borsäure dient als Absorber für entstehende thermische Neutronen. Zweckmäßigerweise beträgt der Borgehalt im Wasser/Beckenwasser des Behälters 2000 bis 3600 ppm, vorzugsweise 2200 bis 3400 ppm und bevorzugt 2250 bis 3200 ppm, beispielsweise 2400 ppm. - Der Erfindung liegt die Erkenntnis zugrunde, dass eine Entfernung/Verdampfung der Borsäure selbst bei der Trocknung/Vakuumtrocknung nicht möglich ist, da der Unterdruck im Behälterinnenraum empfohlenermaßen auf 10 mbar begrenzt wird. Im Rahmen des erfindungsgemäßen Verfahrens wird das bei der Reaktion zwischen der Borverbindung und der Reaktionssubstanz freigesetzte Wasser aus dem Behälterinnenraum abgezogen/verdampft.

Erfindungsgemäß entsteht aus der chemisch gebundenes Wasser aufweisenden Borverbindung und der Reaktionssubstanz ein verdampfbares Borprodukt als Reaktionsprodukt. Vorzugsweise wird dieses verdampfbare Borprodukt bzw. Reaktionsprodukt im Zuge der Trocknung bzw. Vakuumtrocknung aus dem Behälterinnenraum entfernt bzw. abgezogen. Insoweit wird sowohl das aus der Borverbindung freiwerdende Wasser als auch das als Reaktionsprodukt entstehende verdampfbare Borprodukt aus dem Behälterinnenraum entfernt bzw. verdampft.

Es liegt im Rahmen der Erfindung, dass zumindest ein Alkohol als Reaktionssubstanz in dem Behälterinnenraum eingesetzt wird bzw. in den Behälterinnenraum gegeben wird und dass ein Borsäureester als Reaktionsprodukt gebildet wird. Aus der Reaktion von Borsäure mit Alkohol entstehen Borsäureester und Wasser als Reaktionsprodukte. Es liegt weiterhin im Rahmen der Erfindung, dass dann bei der Trocknung bzw. Vakuumtrocknung ein verdampfbarer Borsäureester sowie Wasser abgezogen wird. Das Abziehen von Wasser aus dem Behälterinnenraum verschiebt dabei das Reaktionsgleichgewicht (Esterbildung) auf die Seite des gebildeten Esters und vermeidet bzw. reduziert die Esterspaltung zu den Edukten.

Es liegt im Rahmen der Erfindung, dass ein Alkohol als Reaktionssubstanz eingesetzt wird, der ein Azeotrop bzw. ein azeotropes Gemisch mit Wasser bildet. Gemäß besonders bevorzugter Ausführungsform der Erfindung wird ein Alkohol als Reaktionssubstanz eingesetzt, der einen höheren Siedepunkt, vorzugsweise einen um zumindest 2°C, bevorzugt um zumindest 3°C höheren Siedepunkt aufweist als das entsprechende Azeotrop/azeotrope Gemisch aus dem Alkohol und Wasser. Besonders bevorzugt wird ein Alkohol als Reaktionssubstanz verwendet, der einen um zumindest 5°C, sehr bevorzugt um zumindest 8°C höheren Siedepunkt aufweist als das entsprechende Azeotrop aus dem Alkohol und Wasser. Es liegt im Rahmen der Erfindung, dass das freigesetzte Wasser als Azeotrop mit dem Alkohol aus dem Behälterinnenraum abgezogen wird. Dadurch wird das Wasser dem Reaktionsgleichgewicht (Esterbildung) entzogen und dadurch wird - wie oben bereits dargelegt - das Reaktionsgleichgewicht auf die Seite des gebildeten Esters verschoben und die Esterspaltung vermieden bzw. reduziert.

Eine besonders empfohlene Ausführungsform der Erfindung ist dadurch gekennzeichnet, dass ein kurzkettiger Alkohol als Reaktionssubstanz eingesetzt wird, wobei der Alkohol vorzugsweise eine Kohlenstoffatomanzahl Cₙ mit n ≥ 2 aufweist. Besonders bevorzugt ist dabei ein Alkohol mit einer Kohlenstoffatomanzahl Cₙ mit n = 3 oder n = 4. Eine sehr empfohlene Ausführungsform des erfindungsgemäßen Verfahrens zeichnet sich dadurch aus, dass Propanol, insbesondere n-Propanol (n = 3) als Reaktionssubstanz eingesetzt wird. n-Propanol hat sich im Rahmen des erfindungsgemäßen Verfahrens besonders bewährt. n-Propanol ist in einem azeotropen Gemisch mit Wasser zu 71,1 Gew.-% bzw. zu etwa 71,1 Gew.-% enthalten. Der Siedepunkt von n-Propanol beträgt bei Normalbedingungen 97,2°C und liegt damit vorteilhaft um etwa 10°C höher als der Siedepunkt des azeotropen Gemisches aus Wasser und n-Propanol (87,7°C). Vergleichbare Temperaturdifferenzen liegen auch bei den im Behälter herrschenden Bedingungen bzw. bei den Bedingungen der Vakuumtrocknung bzw. Unterdrucktrocknung vor. - Ethanol und insbesondere Methanol sind als Reaktionssubstanz bei dem erfindungsgemäßen Verfahren weniger geeignet.

Nach besonders bevorzugter Ausführungsform der Erfindung wird der Alkohol bzw. empfohlenermaßen n-Propanol mit der Maßgabe im Überschuss zugegeben, dass sich die Restfeuchte einschließlich des abgespaltenen Reaktionswassers unter den vorgegebenen Bedingungen der Trocknung/Vakuumtrocknung - bevorzugt mit einem Unterdruck von maximal 10 mbar - aus dem Behälterinnenraum entfernen lässt. Der erforderliche Überschuss an Alkohol bzw. an n-Propanol hängt von der Konzentration der Borverbindung bzw. der Borsäure ab und von der Wassermenge, die nach der Entwässerung des Behälterinnenraumes vor der Trocknung/Vakuumtrocknung im Behälter zurückbleibt. Alkohol bzw. n-Propanol kann dem Behälterinnenraum auch wiederholt zugefügt werden. - Es liegt im Rahmen der Erfindung, dass der Alkohol, insbesondere das n-Propanol im Zuge der Trocknung bzw. Vakuumtrocknung aus dem Behälterinnenraum abgezogen bzw. verdampft wird. Es liegt weiterhin im Rahmen der Erfindung, dass zunächst das aus der Borverbindung abgespaltene Reaktionswasser aus dem Reaktionsgleichgewicht entfernt wird und dass anschließend der Alkohol bzw. das n-Propanol abgezogen bzw. verdampft wird.

Eine besonders bevorzugte Ausführungsform des erfindungsgemäßen Verfahrens ist dadurch gekennzeichnet, dass die Umsetzung (Reaktion) der chemisch gebundenes Wasser enthaltenen Borverbindung - insbesondere Borsäure - mit der Reaktionssubstanz säurekatalysatorfrei bzw. im Wesentlichen säurekatalysatorfrei durchgeführt wird. Es wird also zweckmäßigerweise ohne eine Säure und insbesondere ohne Schwefelsäure als Katalysator gearbeitet. Insoweit liegt der Erfindung die Erkenntnis zugrunde, dass negative korrosive Einflüsse eines solchen sauren Katalysators in Bezug auf die Langzeitkorrosionsbeständigkeit des Behälters vermieden werden können.

Der Erfindung liegt die Erkenntnis zugrunde, dass mit dem erfindungsgemäßen Verfahren der Behälterinnenraum eines Transport- und/oder Lagerbehälters für abgebrannte Brennelemente effektiv und funktionssicher von Wasserrückständen und nachteilhafter bzw. störender Restfeuchte befreit werden kann. Von besonderem Vorteil ist dabei, dass das Verfahren so geführt werden kann, dass auch die bei der erfindungsgemäßen Reaktion eingesetzten Reaktionsteilnehmer, insbesondere auch ein als Reaktionssubstanz eingesetzter Alkohol aus dem Behälterinnenraum entfernt werden können. Dabei ist das erfindungsgemäße Verfahren einfach und wenig aufwendig sowie kostengünstig durchführbar. Aufwendige Zusatzmaßnahmen oder Zusatzkomponenten sind nicht erforderlich. Nach Durchführung des erfindungsgemäßen Verfahrens kann die eventuell vorhandene und nicht mehr störende Restfeuchte im Behälterinnenraum präzise und reproduzierbar nachgewiesen werden. Die Erfindung bietet eine effektive und nichtsdestotrotz einfache und wenig aufwendige Möglichkeit zur Entfernung von chemisch gebundenem Wasser aus dem Behälterinnenraum eines Transport- und/oder Lagerbehälters für abgebrannte Brennelemente.

## Patentansprüche

1. Verfahren zur Trocknung von Transport- und/oder Lagerbehältern für radioaktive Abfälle, insbesondere für abgebrannte Brennelemente, wobei der Wasser enthaltende Behälterinnenraum einer Trocknung, insbesondere einer Vakuumtrocknung unterzogen wird, wobei zumindest eine im Behälterinnenraum vorhandene Borverbindung mit chemisch gebundenem Wasser mit zumindest einer Reaktionssubstanz versetzt wird, so dass das chemisch gebundene Wasser der Borverbindung freigesetzt wird, wobei aus der chemisch gebundenes Wasser aufweisenden Borverbindung und der Reaktionssubstanz ein verdampfbares Borprodukt als Reaktionsprodukt entsteht und wobei das freigesetzte Wasser und das verdampfbare Borprodukt bzw Reaktionsprodukt bei der Trocknung bzw. insbesondere bei der Vakuumtrocknung des Behälters aus dem Behälterinnenraum abgezogen bzw. entfernt wird.

2. Verfahren nach Anspruch 1, wobei die Trocknung bzw. Vakuumtrocknung bei einem Unterdruck von bis zu 12 mbar, vorzugsweise von bis zu 10 mbar durchgeführt wird.

3. Verfahren nach einem der Ansprüche 1 oder 2, wobei die chemisch gebundenes Wasser aufweisende Borverbindung Borsäure bzw. Orthoborsäure (H₃BO₃) ist.

4. Verfahren nach einem der Ansprüche 1 bis 3, wobei zumindest ein Alkohol als Reaktionssubstanz eingesetzt wird und wobei ein Borsäureester als Reaktionsprodukt gebildet wird.

5. Verfahren nach Anspruch 4, wobei ein Alkohol als Reaktionssubstanz eingesetzt wird, der einen höheren Siedepunkt, vorzugsweise einen um zumindest 2°C, bevorzugt um zumindest 3°C höheren Siedepunkt aufweist als das entsprechende Azeotrop aus dem Alkohol und Wasser.

6. Verfahren nach einem der Ansprüche 4 oder 5, wobei ein Alkohol mit einer Kohlenstoffatomanzahl Cₙ mit n = 3 oder n = 4 als Reaktionssubstanz eingesetzt wird und wobei besonders bevorzugt n-Propanol (n = 3) als Reaktionssubstanz eingesetzt wird.

7. Verfahren nach einem der Ansprüche 4 bis 6, wobei Alkohol im Überschuss als Reaktionssubstanz zugefügt wird.

8. Verfahren nach einem der Ansprüche 4 bis 7, wobei der Alkohol im Zuge der Trocknung bzw. der Vakuumtrocknung des Behälters abgezogen bzw. verdampft wird.

9. Verfahren nach einem der Ansprüche 1 bis 8, wobei die Umsetzung (Reaktion) der chemisch gebundenes Wasser enthaltenden Borverbindung mit der Reaktionssubstanz säurekatalysatorfrei bzw. im wesentlichen säurekatalysatorfrei durchgeführt wird.

## Claims

1. A method for drying transport and/or storage containers for radioactive waste, in particular for spent fuel elements, wherein the water-containing container interior is subjected to drying, in particular vacuum drying, wherein at least one boron compound with chemically bound water present in the container interior is mixed with at least one reaction substance, so that the chemically bound water of the boron compound is released, wherein a vaporizable boron product arises as a reaction product from the boron compound containing chemically bound water and the reaction substance and wherein the liberated water and the vaporizable boron product or reaction product is drawn off or removed from the container interior during the drying or in particular during the vacuum drying of the container.

2. The method according to claim 1, wherein the drying or vacuum drying is carried out at an underpressure of up to 12 mbar, preferably of up to 10 mbar.

3. The method according to any one of claims 1 or 2, wherein the boron compound containing chemically bound water is boric acid or orthoboric acid (H₃BO₃).

4. The method according to any one of claims 1 to 3, wherein at least one alcohol is used as a reaction substance and wherein a boric acid ester is formed as a reaction product.

5. The method according to claim 4, wherein an alcohol is used as a reaction substance, which has a higher boiling point, preferably a boiling points higher by at least 2°C, preferably by at least 3°C, than the corresponding azeotrope comprising the alcohol and water.

6. The method according to any one of claims 4 or 5, wherein an alcohol with a carbon atom number Cₙ with n = 3 or n = 4 is used as a reaction substance and wherein particularly preferably n-propanol (n = 3) is used as a reaction substance.

7. The method according to any one of claims 4 to 6, wherein alcohol is added in excess as a reaction substance.

8. The method according to any one of claims 4 to 7, wherein the alcohol is drawn off or vaporized in the course of the drying or the vacuum drying.

9. The method according to any one of claims 1 to 8, wherein the reaction of the boron compound containing chemically bound water with the reaction substance is carried out free from acid catalyst or essentially free from acid catalyst.

## Revendications

1. Procédé pour le séchage de récipients de transport et/ou de stockage pour des déchets radioactifs, en particulier pour des éléments combustibles usés, dans lequel l'espace intérieur du récipient contenant de l'eau est soumis à un séchage, en particulier à un séchage sous vide, dans lequel un composé de bore présent dans l'espace intérieur du récipient avec de l'eau liée chimiquement est mélangé avec au moins une substance réactive, de manière à libérer l'eau chimiquement liée du composé de bore, dans lequel un produit de bore susceptible d'être évaporé est formé en tant que produit de réaction à partir du composé de bore comportant de l'eau chimiquement liée et de la substance réactive, et dans lequel l'eau libérée et le produit de bore susceptible d'être évaporé ou le produit de réaction est/sont extrait(s) ou éliminé(s) de l'espace intérieur du récipient lors du séchage ou en particulier lors du séchage sous vide du récipient.

2. Procédé selon la revendication 1, dans lequel le séchage ou le séchage à vide est effectué sous une dépression allant jusqu'à 12 mbar, de préférence jusqu'à 10 mbar.

3. Procédé selon l'une des revendications 1 ou 2, dans lequel le composé de bore comportant de l'eau chimiquement liée est un acide borique ou un acide orthoborique (H₃BO₃).

4. Procédé selon l'une des revendications 1 à 3, dans lequel au moins un alcool est utilisé comme substance réactive et dans lequel un ester d'acide borique est formé comme produit de réaction.

5. Procédé selon la revendication 4, dans lequel un alcool est utilisé comme substance réactive, lequel présente un point d'ébullition plus élevé, de préférence un point d'ébullition plus élevée d'au moins 2°C, avantageusement d'au moins 3°C, que l'azéotrope correspondant constitué par l'alcool et l'eau.

6. Procédé selon l'une des revendications 4 ou 5, dans lequel un alcool avec un nombre d'atomes de carbone Cₙ, avec n = 3 ou n = 4, est utilisé comme substance réactive, et dans lequel du n-Propanol (n = 3) est utilisé de façon particulièrement préférentielle comme substance réactive.

7. Procédé selon l'une des revendications 4 à 6, dans lequel de l'alcool est ajouté en excès comme substance réactive.

8. Procédé selon l'une des revendications 4 à 7, dans lequel l'alcool est extrait ou évaporé au cours du séchage ou du séchage sous vide du récipient.

9. Procédé selon l'une des revendications 1 à 8, dans lequel la transformation (réaction) du composé de bore contenant de l'eau chimiquement liée avec la substance réactive est effectuée sans catalyseur acide ou quasiment sans catalyseur acide.
